(19) Europäisches Patentamt
European Patent Office
Office européen des brevets

(11) EP 2 782 281 A1

(12) EUROPEAN PATENT APPLICATION

(43) Date of publication:
**24.09.2014 Bulletin 2014/39**

(51) Int Cl.:
***H04L 1/00*** *(2006.01)*

(21) Application number: **13305351.2**

(22) Date of filing: **22.03.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ALCATEL LUCENT**
**92100 Boulogne-Billancourt (FR)**

(72) Inventors:
- **Rouzbeh, Razavi**
**Dublin, 15 (IE)**
- **Claussen, Holger**
**Dublin, 15 (IE)**

(74) Representative: **Coghlan, Judith Elizabeth Kensy et al**
**Script IP Limited**
**Turnpike House**
**18 Bridge Street**
**Frome BA11 1BB (GB)**

# (54) Data transmission using rateless coding

(57) A method of transmitting a data message comprising a plurality of data symbols from a transmitting node to a receiving node in a network and an analogous method of receiving a data message at a receiving node in a network. Transmitting and receiving network nodes and computer program products operable to perform said methods. The method of receiving comprises: receiving a plurality of coded packets comprising the data message encoded using rateless coding techniques; decoding the received plurality of coded packets; determining at least one of the plurality of data symbols required by the receiving node to successfully decode the data message; and transmitting an indication of the required data symbols to the transmitting node. Aspects and embodiments recognise that security and uncontrolled latencies are a concern when running data transmission services, for example, on a cloud computing infrastructure. Use ofrateless coding with feedback may address the shortcomings of existing transport protocols such as TCP and UDP.

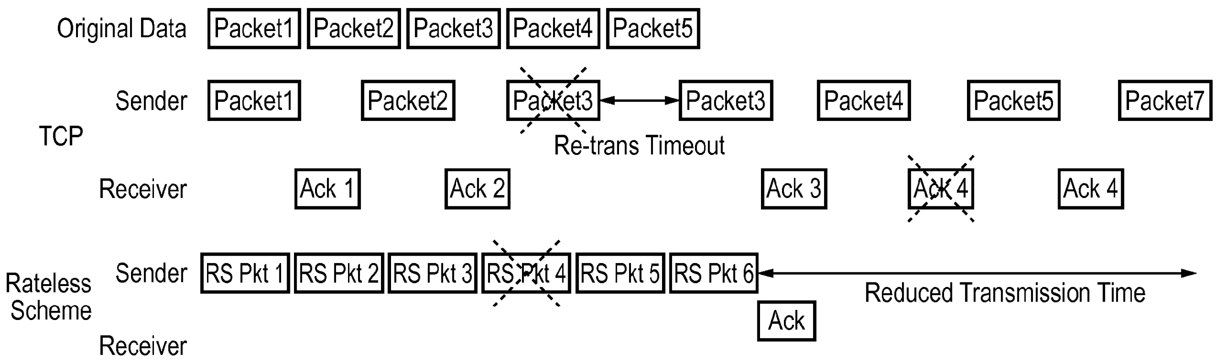


FIG. 2: Comparison of TCP and the proposed rateless coding transmission

EP 2 782 281 A1

## Description

### FIELD OF THE INVENTION

The present invention relates to a method of transmitting a data message comprising a plurality of data symbols from a transmitting node to a receiving node in a network, a transmitting network node and a computer program product operable to perform that method. The invention further relates to an analogous method of receiving a data message comprising a plurality of data symbols from a transmitting node at a receiving node in a network; a receiving network node and a computer program product operable to perform that method.

### BACKGROUND

TCP is currently considered as the main transport protocol. According to a research study by the Cooperative Association for Internet Data Analysis (CAIDA), TCP carries more than 89% of the total traffic world-wide. However, TCP's performance is very sensitive to packet losses and delayed packets. Specifically, the aggressive back-off behaviour of TCP may result in underutilisation of links and increased delays. As a result of such behaviour, throughput can drop significantly with only small packet drop rate.

The increased latency which results from TCP back-off behaviour can be problematic, for example, when considering cloud-based services where Service Level Agreement (SLA) violation may result in a financial penalty for a cloud provider. It will be appreciated that excessive delay occurs more frequently when there is congestion in a network and that is exactly when the TCP back-off behaviour is most significant.

Furthermore, a significant increase of mobile data usage has resulted in wireless links becoming an integral part of most end-to-end communications within a network. Use of wireless channels can result in higher packet drop rates and hence TCP can be a sub-optimal choice for wireless channels.

There is thus a need for a mechanism that may allow a network to provide faster delivery of packets, for example, in relation to delay sensitive applications that are close to their expiry time.

TCP is still the most used transport protocol as a result of its performance reliability.

UDP is a simpler protocol which does not provide any guarantee in relation to reliability of a packet delivery process. UDP may use fixed rate error correction codes to try and address reliability, but use of packet-level error correction codes results in a trade-off of bandwidth and reliability and can result in unnecessary utilisation of bandwidth by FEC codes. Hybrid ARQ techniques can be efficient but their performance can depend upon implementation and the may introduce additional delay as a result of the need for signalling exchange.

It is desired to offer an alternative scheme for transmission and reception of data within a network.

### SUMMARY

Accordingly, a first aspect provides: a method of receiving a data message comprising a plurality of data symbols from a transmitting node at a receiving node in a network, the method comprising: receiving a plurality of coded packets comprising the data message encoded using rateless coding techniques; decoding the received plurality of coded packets; determining at least one of the plurality of data symbols required by the receiving node to successfully decode the data message; and transmitting an indication of the required data symbols to the transmitting node.

The first aspect recognizes that use of rateless coding techniques to transport data can offer inherent advantages. Using rateless coding techniques, the chance of decoding any N original packets using any N rateless coded packets has a relatively high probability. Rateless codes and rateless coding techniques are typically used for channels in which no feedback is available, for example, broadcast applications. The first aspect recognizes that it is possible to offer the benefit of rateless coding techniques and provide feedback from a receiving node such that reliability offered to transmissions made using rateless coding can be improved. In particular, depending upon implementation, the first aspect recognizes that the use of rateless codes can allow for removal of frequent acknowledgement packets such as those currently used in TCP. Minimising feedback packet transmission can result in improved quality of service and reduced communication latency.

The first aspect recognises that even if a receiver has safely received a batch ( for example, N+M) of coded packets relating to N data symbols in the source data message, the nature of rateless coding techniques may be such that decoding of the N data symbols may not be possible. As a result, a receiving node may be operable to indicate to a transmitter that further packets are required. Various methods can be used at the transmitting node in response to an indication that further coded packets are required to decode the source data message.

The first aspect may allow a receiving node to be operable to implement a smart request for further information from a transmitting node. On decoding, or partial decoding, of a first data message from a batch of coded packets, a receiving node may be operable to transmit an indication that further information is required in order to decode the data message. That further information required may be in the form of data symbols required in order to decode a data message or particular data packets required to decode a message. In the case where particular data symbols are required, a transmitting node may be operable to create a "new" data message formed from the sub-set of data symbols required by a receiving node to decode a first data message, and transmission of coded rateless packets relating to that new data message. The new data message may be transmitted until an acknowledgement that commencement of transmission of coded packets relating to a different data message is received at the transmitting node. It will be appreciated that, in some embodiments, a transmitting node may be operable to retransmit particular coded data packets requested by a receiving node, or to transmit an encoded data symbol directly.

Aspects and embodiments may be used for delay sensitive or premium services as a means of prioritisation of packets delivery, or may be used across all data flows within a network. Implementation of aspects and embodiments may be dependent upon a number of factors, for example, when to use the techniques, together with parameters which impact performance of the algorithm. Those factors are further discussed below.

In one embodiment, the indication is transmitted after said receiving node determines that trigger criteria are met. Accordingly, a receiving network node may only be operable to commence transmit an indication of required data symbols, or an indication that no further data symbols are required, thus allowing a transmitting node to commence transmission of a different data message, after some threshold or trigger has been met by a receiving network node. The trigger criteria are configurable and may be chosen in relation to one or more of a number of operational criteria, to tailor operation of a feedback mechanism to a particular application or mode of operation within a network. The trigger criteria may, for example, be chosen based upon, for example, whether a predetermined number of coded packets has been received at a receiving network node. It will be appreciated that, after receipt of such an indication from a receiving network node, a transmitting node may be operable to commence transmission of a new data message, that data message being formed from, for example, a sub set of data symbols which formed said original data message. In some embodiments, that subset of data symbols comprises those data symbols indicated by the receiving node to be required for successful decoding of the original data message.

In one embodiment, the trigger criteria comprises: receipt of a selected number of coded packets. In one embodiment, the method comprises receiving an indication of a number of coded packets in a batch. In one embodiment, the method comprises: determining the number of coded packets in dependence upon at least one of: data message type, data message priority, or service level. Accordingly, a receiving node may expect a predetermined number of coded packets to form a batch and, once that preselected number has been received at the receiving node, the receiver may be operable to send an acknowledgement. If the method of the first aspect is to be used to transmit a data message, a receiver may be operable to assume a batch is of a particular size, simply indicated by use of the rateless coding transmission technique. Based on the coding parameters used, an initial overhead can be estimated such that the receiver can be relatively sure that upon reception of N+M packets a receiver would be operable to decode successfully. The transmitter is then operable to commence the sending of rateless coded packets. Once such N+M coded packets are received, the receiver may be operable to send a 'Reception Acknowledgement' for that batch of packets. Upon reception of such an acknowledgment, the transmitter can immediately start transmitting rateless coded packets relating to the next batch. Accordingly, batch size (number of coded packets to be received before transmission of an acknowledgement to a transmitter) may be a configurable parameter of the transmission of the first aspect.

In one embodiment, decoding occurs concurrently with receipt of coded packets. Accordingly, a receiving node, after reception of a batch of coded packets, can immediately indicate to a transmitting node that further packets are required and indicate which data symbols are required to decode the data message. The transmitting node may take appropriate action upon receipt of such an indication.

In one embodiment, decoding occurs after receipt of a selected number of coded packets. A receiving node may await receipt of a whole batch before commencing any decoding. As a result, only after decoding the received batch can a receiving node indicate which data symbols may be required to allow successful decoding of a data message.

In one embodiment, the method comprises selecting the number of coded packets in dependence upon data message type. Generally speaking, longer (greater numbers of source packets) batches offer a more efficient transmission scheme, since they result in a lower overhead and hence reduce batch latency. Batch latency is defined as time taken to deliver all packets of a batch. However, in contrast to a strictly sequential packet transmission regime according to which a packet is immediately usable upon its correct reception, use of rateless codes may result in a situation in which a packet may need to wait until the whole batch is received before it can be successfully decoded. If the individual packets delay is important as well as batch delay, for example, in multimedia applications, batch size can be restricted. It will be appreciated that batch size has implications in relation to both memory requirement and computational complexity of decoding. These considerations may be taken into account when batch size is decided for a data stream or data message. In some embodiments, the receiving node will be informed of a batch size directly, in some embodiments a receiving node may be operable to calculate or select a batch size in dependence upon, for example, an indication of a type of data forming the data message.

In some embodiments, decoding may occur as further coded packets are being received. That is to say, the decoding process may occur simultaneously to reception of further coded packets. In some embodiments, decoding may only commence once a "batch" of coded packets have been received. In some embodiments, decoding may commence after reception of a proportion of an expected "batch".

In one embodiment, the method further comprises: requesting transmission of a retained plurality of coded packets as part of the indication that the receiving node required further packets to decode the data message. Accordingly, in one example, the transmitter could keep L extra rateless coded packets of a first data message in an additional buffer and, on receipt of an indication that the receiver cannot decode the first data message, the transmitter may be operable to transmit the L packets held in the buffer. Receipt of any additional coded packets may be sufficient for a receiver to decode a data message successfully.

In one embodiment, the method comprises: determining which of the plurality of data symbols required by the receiving node to successfully decode the data message may be most useful in the decoding process and transmitting an indication of at least one of those data symbols determined to be most useful to the receiving node. In one embodiment, the method comprises determining an indication of a priority associated with each of the plurality of data symbols required by the receiving node to successfully decode the data message and transmitting an indication of a priority associated with each of the plurality of data symbols required by the receiving node to successfully decode the data message to said transmitting node. Accordingly, the nature of the decoding process in some embodiments may allow a receiving node or decoder to identify the usefulness of missing packets. Decoding may fail in any case where no degree-one coded packets exist or when known degree-one coded packets cannot be used to reduce degree of other received coded packets any further. To determine which original packets are additionally required to allow successful decoding, or which source data symbols are required, a decoder may be operable to determine a relative usefulness indication for each missing source data symbol, given the coded packets which have been received. As a result a transmitting node may be able to focus any future coded packets such that they are formed from source data symbols of most use to a decoder and thus transmission of coded packets within a network may be minimized. In some embodiments, the indication may comprise an indication of a sub-set of data symbols required, or missing, by said receiving node. That sub-set of required data symbols may be selected to be a minimum sub-set of missing data symbols which would allow for full decoding of all required (or missing) data symbols.

In one embodiment, the indication may comprise an indication that the receiving node is able to decode the data message. Accordingly, rather than count received packets, a receiving node may be operable to decode the coded packets as they arrive and send an indication to a transmitter only when able to decode a source data message. Unnecessary signalling within a network may thus be minimised, a transmitter only receiving an indication to commence encoding and transmission of a new data message once a first is safely received and correctly decoded.

In one embodiment, the method comprises: decoding one or more of the coded packets to extract at least one of the data symbols and checking the extracted data symbol with an equivalent data symbol decoded from a different set of one or more of the coded packets.

In one embodiment, the method comprises: receiving communication of a coding map from the transmitting node. It will be appreciated that in order to decode the coded packets it is necessary for a receiver to be aware of a coding map, which indicates how source packets are combined to form rateless coded packets. Each coded packet will typically have a sequential packet number and the mapping for each coded packet will be known to both the transmitting and receiving node. If mapping between original packets and rateless coded packets is not sent along with the coded packets but rather in a secure manner such that only a receiving node is informed about the mapping structure, no third party can decode the data.

In one embodiment, the coding map comprises: an indication of a coding degree for each coded packet and an indication of which of the plurality of data symbols are included in the coded packet.

In one embodiment, the communicating comprises: receiving the coding map directly from the transmitting network node.

In one embodiment, communicating comprises: receiving the coding map within the coded packets from the transmitting network node.

In one embodiment, communicating comprises: reception of an identifier of the coding map to be used by the receiving node to generate the coding map.

In one embodiment, the method comprises: decrypting the coding map.

Various means can be used to exchange coding map information between a transmitting node and a receiving node within a network. In one embodiment, the communicating comprises: receiving the coding map directly from the transmitting network node. In one embodiment, communicating comprises: determining the coding map from information within the coded packets. In one embodiment, communicating comprises: reception of an identifier of the coding map to be used by the receiving node to generate the coding map.

In one embodiment, the method comprises decoding one or more of the coded packets to extract at least one of the data symbols and checking the extracted data symbol with an equivalent data symbol decoded from a different set of one or more of the coded packets. Because of the nature of fountain coding techniques, some (approximately 1-5%) coded data packets are essentially repeated and thus may be decoded more than once. In some embodiments, different versions of a decoded source packet can be compared at a receiver to obtain a degree of assurance of data integrity. That comparison may be made during a transmission. Since the decoding of rateless coded packets can be heavily interdependent, a small modification of bit streams of one packet can easily propagate into many other packets. Therefore, redundantly decoded packets can be used to assure integrity of received data.

A second aspect provides a computer program product operable, when executed on a computer, to perform the method of the first aspect.

A third aspect provides a network node operable to receive a data message comprising a plurality of data symbols from a transmitting node in a network, the network node comprising: reception logic operable to receive a plurality of coded packets comprising the data message encoded using rateless coding techniques; decoding logic operable to decode the received plurality of coded packets; assessment logic operable to determine at least one of the plurality of data symbols required by the receiving node to successfully decode the data message; and transmission logic operable to transmit an indication of the required data symbols to the transmitting node.

In one embodiment, the reception logic is operable to receive an indication of a number of coded packets in a batch. In one embodiment, the decoding logic is operable to decode the coded packets to extract the data symbols and reform the data message.

In one embodiment, the decoding logic is operable to transmit an indication that further coded packets are required to decode the data message.

In one embodiment, the decoding logic is operable to request transmission of a retained plurality of coded packets.

The decoding logic is operable to determine that at least one of the plurality of data symbols is required by the receiving node to successfully decode the data message, and transmit an indication of at least one of the plurality of data symbols required to successfully decode the data message to the transmitting network node.

In one embodiment, the decoding logic is operable to determine an indication of a priority associated with each of the plurality of data symbols required by the receiving node to successfully decode the data message and transmit an indication of a priority associated with each of the plurality of data symbols required by the receiving node to successfully decode the data message to said transmitting node.

In one embodiment, the indication comprises an indication that the receiving node is able to decode the data message.

In one embodiment, the network node comprises: coding map logic operable to receive communication of a coding map from the receiving node.

In one embodiment, the coding map comprises: an indication of a coding degree for each coded packet and an indication of which of the plurality of data symbols are included in the coded packet.

In one embodiment, the coding map logic is operable to receive the coding map directly from the transmitting network node.

In one embodiment, the coding map logic is operable to receive the coding map within the coded packets from the transmitting network node.

In one embodiment, the coding map logic is operable to receive an identifier of the coding map to be used by the receiving node to generate the coding map.

In one embodiment, the coding map logic is operable to decrypt the coding map.

In one embodiment, the network node further comprises data integrity logic operable to decode one or more of the coded packets to extract at least one of the data symbols and check the extracted data symbol with an equivalent data symbol decoded from a different set of one or more of the coded packets.

A fourth aspect provides a method of transmitting a data message comprising a plurality of data symbols from a transmitting node to a receiving node in a network, the method comprising: encoding the data symbols into a plurality of coded packets using rateless coding techniques; and transmitting the coded packets to the receiving node until receipt of an indication of at least one of said plurality of data symbols required by the receiving node to successfully decode said data message.

In one embodiment, the indication comprises an indication that the receiving node has successfully decoded a batch of coded packets.

In one embodiment, the method comprises selecting a number of coded packets in a batch to be decoded and transmitting an indication of that selected number of coded packets in the batch to the receiving node.

In one embodiment, the method further comprises: retaining a plurality of the coded packets after commencing transmission of a different encoded data message and transmitting the retained plurality of coded packets in the event of receiving an indication that further coded packets are required to decode the data message.

In one embodiment, the indication comprises an indication of at least one of the plurality of data symbols required by the receiving node to successfully decode the data message and the transmitting node is operable to transmit a different encoded data message comprising the required data symbols.

In one embodiment, the indication comprises an indication of a priority associated with each of the plurality of data symbols required by the receiving node to successfully decode the data message and transmission of a different encoded data message comprises transmission of a new data message comprising the required data symbols.

In one embodiment, the indication comprises an indication that the receiving node is able to decode the data message.

In one embodiment, the method comprises: selecting a data stream comprising a plurality of the data messages for transmission by identifying a data stream meeting priority criteria.

Aspects and embodiments offer a scheme of packet delivery based on rateless codes with a degree of feedback. Such transmission techniques can be used as a means of prioritizing a service or data traffic flow. One advantage of the scheme over TCP is that of reduced latency while maintaining levels of reliability, at least in comparison to UDP transmission schemes. Aspects and embodiments may be of use in: delay sensitive applications (especially those with lower data rates); data flows associated with premium users in cloud environment (service differentiation); scenarios where a Service Level Agreement (SLA) is expected to be violated due to service latency (financial penalty); delivering emergency (high priority) services over a congested network; and delivering premium services in high loss channels. Accordingly, the method of the first aspect may be implemented for data flows comprising data messages meeting any of those, or similar, priority criteria.

In one embodiment, transmitting the coded packets comprises consecutively transmitting said data packets. In one embodiment, the delay between consecutive data packets is zero. In one embodiment, transmitting the coded packets comprises: transmitting the data packets at a maximum available data rate supportable by the network. It will be appreciated that the method of the first aspect may offer advantages over TCP and UDP transport protocols for transmission of data if the coded packets are sent as fast and as often as possible, using any available network resource to reach a receiving node. If a channel is lossy, the method of the first aspect operates such that a transmitter only moves to another data message once a transmitting node receives some indication that it is likely a receiver has received enough packets to attempt decoding of a first data message.

In one embodiment, the method comprises: communicating a coding map to the receiving node. In one embodiment, the method comprises: encrypting the coding map.

In one embodiment, the coding map comprises: an indication of a coding degree for each coded packet and an indication of which of the plurality of data symbols are included in the coded packet.

A fifth aspect provides a computer program product operable, when executed on a computer, to perform the method of the fourth aspect.

A sixth aspect provides, a network node operable to transmit a data message comprising a plurality of data symbols to a receiving node in a network, the network node comprising: coding logic operable to encode the data message into a plurality of coded packets using rateless coding techniques; and transmission logic operable to transmit the coded packets to the receiving node until receipt of an indication of at least one of the plurality of data symbols required by the receiving node to successfully decode the data message.

In one embodiment, the indication comprises an indication that the receiving node has decoded a batch of coded packets.

In one embodiment, the network node further comprises batch size selection logic operable to select a number of coded packets in a batch and transmit an indication of that selected number of coded packets in the batch to the receiving node.

In one embodiment, the batch size selection logic is operable to select the number of coded packets in dependence upon data message type.

In one embodiment, the transmission logic is operable to receive an indication that further coded packets are required to decode the data message.

In one embodiment, the network node further comprises buffer logic operable to retain a plurality of the coded packets after receipt of the indication that the transmitting node can commence transmission of a different encoded data message and transmit the retained plurality of coded packets in the event of reception of an indication that further coded packets are required to decode the data message.

In one embodiment, the indication comprises an indication of at least one of the plurality of data symbols required by the receiving node to successfully decode the data message and the transmission logic is operable to transmit a different encoded data message comprising the required data symbols.

In one embodiment, the indication comprises an indication of at least one of the plurality of coded packets required by the receiving node to successfully decode the data message and the transmission logic is operable to transmit the required coded packets.

In one embodiment, the indication comprises an indication of a priority associated with each of the plurality of data symbols required by the receiving node to successfully decode the data message and the transmission logic is operable to transmit a different encoded data message comprising the required data symbols.

In one embodiment, the indication comprises an indication that the receiving node is able to decode the data message.

In one embodiment, the network node comprises: selection logic operable to select a data stream comprising a plurality of data messages for transmission by identifying a data stream meeting priority criteria.

In one embodiment, transmitting the coded packets comprises consecutively transmitting the data packets.

In one embodiment, the delay between consecutive data packets is zero.

In one embodiment, transmitting the coded packets comprises: transmitting the data packets at a maximum available data rate supportable by the network.

In one embodiment, the network node comprises: map logic operable to communicate a coding map to the receiving node.

In one embodiment, the coding map comprises: an indication of a coding degree for each coded packet and an indication of which of the plurality of data symbols are included in the coded packet.

In one embodiment, the communicating comprises: transmitting the coding map directly to the receiving network node.

In one embodiment, communicating comprises: transmitting the coding map within the coded packets to the receiving network node.

In one embodiment, communicating comprises: transmission of an identifier of the coding map to be used by the receiving node to generate the coding map.

In one embodiment, the map logic is operable to encrypt the coding map.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

## BRIEF DESCRIPTION OF THE DRAWINGS

Embodiments of the present invention will now be described further, with reference to the accompanying drawings, in which:

Figure 1 illustrates schematically a coding relationship between input and output symbols by means of a bipartite graph;

Figure 2 is a schematic comparison of a transmission made using TCP and a transmission according to one embodiment;

Figure 3 illustrates schematically a histogram of actual rateless coded packets required to successfully decode 10,000 original packets for two different coding strategies;

Figure 4 shows a schematic illustration of transmission and reception techniques employed according to some embodiments;

Figure 5 illustrates schematically by means of a bipartite graph, mapping of original packets into input (coded) packets;

Figure 6 illustrates schematically a robust soliton distribution for K=40 and K=1000;

Figure 7 illustrates schematically the number of operations required to break a 128-bit and a 256-bit key; and

Figure 8 illustrates schematically exchange of a coding map via exchange of seed values.

## DESCRIPTION OF THE EMBODIMENTS

### Overview

Before discussing the embodiments in any more detail, first an overview will be provided.

Aspects and embodiments described use rateless codes and feedback, and may be used to prioritize delivery of delay sensitive or premium traffic flows within a network. Rateless codes and rateless coding techniques are typically used for channels in which no feedback is available, for example, broadcast applications. Using rateless coding techniques, the chance of decoding any N original packets using any N rateless coded packets has a relatively high probability. In broadcast applications, assuming a lossy transmission channel, N+M rateless coded packets are transmitted for each data message, with M being selected to account for the lossy channel and the probability that N coded packets will allow decoding of the N original packets.

Aspects and embodiments described relate to a packet delivery protocol based on rateless codes and UDP, with some degree of feedback. Some implementations of aspects and embodiments may be used in order to prioritize delay sensitive services and to maximize network utilization. Aspects and embodiments may be used for delay sensitive or premium services as a means ofprioritisation of packets delivery. The use of rateless codes can allow for removal of frequent acknowledgement packets such as those currently used in TCP. Minimising feedback packet transmission can result in improved quality of service and reduced communication latency.

Implementation of aspects and embodiments may be dependent upon a number of factors, for example, when to use the techniques, together with parameters which impact performance of the algorithm. Those factors are further discussed below.

It will be appreciated that use ofrateless coding techniques may allow aspects and embodiments to offer some level of data confidentiality.

## Rateless Codes & Rateless Coding Techniques

This section outlines the rudimentary principles of the encoding and decoding techniques of rateless coding for transmission over erasure channels. Luby transform (LT) codes are one practical realization of rateless codes and they are used below to explain the principles ofrateless codes and rateless coding techniques. Although the description below relates to Luby transform codes, it will be appreciated that many other implementations are possible.

### 1.1 Encoding Procedure

Assume a data message consisting of K input (source) symbols $v = [v_1\ v_2 \cdots v_k]$, each symbol containing an arbitrary number of bits. Consider a hypothetical example of a data message containing four two-bit symbols given by the vector: v =[00 10 11 01].

The LT-encoded symbols $c = [c_j]$, (j = 1, .., N) are simply the modulo-2 sum (i.e., the exclusive OR (XOR) of $d_c$ distinct input symbols, chosen uniformly at random. The actual $d_c$-value of each symbol to be encoded is chosen from a pre-defined distribution $f(d_c)$, which can also be referred to as an "output distribution".

In the case of the example, assuming that the first $d_c$-value sampled from $f(d_c)$ is 2, then two input symbols will be chosen at random from v.

In this case, assume that the two selected source symbols correspond to the first and second symbol in v. Accordingly, $c_1$ will be calculated as $00 \otimes 10 = 10$, where "$\otimes$" denotes the XOR function.

The rateless coding techniques (or fountain coding techniques) in this example are such that rateless coded packets are produced by the encoding algorithm. That algorithm operates to select a $d_c$ value from $f(d_c)$ and then calculate an encoded symbol according to the XOR product of a $d_c$-number ofpseudo-randomly selected source symbols. Some authors prefer to refer to the encoded symbols as "LT-encoded packets".

Figure 1 illustrates schematically a coding relationship between input and output symbols by means of a bipartite graph. According to the graph shown in Figure 1, input source symbols are referred to as a variable node, whilst the LT-encoded output symbols are referred to as a check node. The number of edges emerging from each check node corresponds to the dc-value sampled from $f(d_c)$. As a result, dc is sometimes referred to as the check degree.

### 1.2 Decoding Procedure

In the case of a lossy or "erasure" channel, encoded symbols of c are erased during transmission. The task of a decoding node of a network is that of recovering source symbols from unerased coded symbols.

The decoding process may, in some embodiments, commence by location of a degree-one input symbol; that is to say, a symbol that is not XOR-combined with any other. The decoder is then operable to modulo-2 add the value of that degree one symbol to all LT-encoded symbols relying on that degree one symbol and remove the corresponding modulo-2 connections, where each connection is represented by an edge on the associated bipartite graph of Figure 1.

The decoding procedure continues in an iterative manner, each time starting from a degree-one symbol.

## 2. Feedback Method

### 2.1 Concept

Rateless coding techniques such as those described above may allow, in a completely lossless case of transmission and reception, any N original packets may be decoded, with a high probability using any N received rateless coded packets. As a result of the random nature of some rateless coding techniques, it is possible that some coded packets are essentially duplicates or that some source packets can be missing in N coded packets. Thus, according to some implementations, some additional packet overhead may be required in order to assure successful decoding of a received set of rateless coded packets. Typically, the packet overhead is marginal (1-8%). The actual overhead may depend upon coding parameters. For example, with existing coding methods, it is possible to choose coding parameters such that the mean of the overheads is small with larger variance or instead using a strategy that requires higher overheads on average but with lower variance.

Figure 3 illustrates schematically a histogram of actual rateless coded packets required to successfully decode 10,000 original packets for two different coding strategies.

Rateless coding techniques can remove the requirement for a sender to retransmit a particular data packet in the case that such a packet is dropped or received with uncorrectable errors. Instead, a sender can continue transmitting rateless coded packets until N packets (or N+M packets in a batch taking into account overheads) are received. According to one embodiment, the number of packets involved in each "batch" is decided and communicated to a receiver. The optimal size of a batch is a configurable parameter and is discussed below.

According to some embodiments, a receiver may, on receipt of N (or N+M) coded packets, be operable to send a single acknowledgment packet. That acknowledgement packet may indicate to the sender that it is no longer necessary to continue sending coded packets relating to a first data message and the sender can begin transmitting rateless coded packets associated with a new data message.

Such an implementation may improve the latency of a transmission, if compared to use of TCP, especially under congestion conditions.

Figure 2 is a schematic comparison of a transmission made using TCP and a transmission according to one embodiment.

In one embodiment, the transmission transport protocol is similar to UDP, in that a transmitter is operable to send data packets consequently, without a pause between packets and at a data rate as high as can be supported by a network. Once an indication is received at a transmitter that enough packets (the agreed batch size) have been received by the receiver side, the transmitter is operable to move on to transmission of the next set of coded packets. If the size of a batch is changed, that change is communicated to a receiver.

Rateless coded packets typically contain mapping information with respect to the source data packets. Since each batch of rateless coded packets covers a certain range of original packets, each batch forming an original "data message", a receiver may be operable to determine, from a received coded packet, whether it belongs to a new batch. Accordingly, if an acknowledgement of safe receipt of a batch message transmitted by a receiving node is lost, a receiving node will keep receiving coded rateless packets belonging to a previously acknowledged batch. In such a scenario, a receiver may be operable to assume that the acknowledgement message has not been received by the transmitter and then re-send the acknowledgement message.

According to one embodiment, a transmitter may be operable to provision an additional buffer. Based on the coding parameters used, an initial overhead can be estimated such that the receiver can be relatively sure that upon reception of N+M packets a receiver would be operable to decode successfully. The transmitter is then operable to commence the sending of rateless coded packets. Once such N+M coded packets are received, the receiver is operable to send a ’Reception Acknowledgement’ for that batch of packets. Upon reception of such an acknowledgment, the transmitter can immediately start transmitting rateless coded packets relating to the next batch. However, to fully assure successful decoding of the packets, the transmitter could keep L extra rateless coded packets of the previous batch in the additional buffer.

According to one embodiment, whilst a receiver is collecting packets relating to a new batch, it may be operable to begin decoding packets relating to a previous batch. In some embodiments, decoding can be started immediately after reception of the first packets, but the success of the process may not be known until last packets are received and decoded. In any case, if decoding is done successfully using the N+M received packets, the receiver maybe operable to send another acknowledgement message, namely a ’Decoding Acknowledgment’ relating to the decoded batch. Upon reception of such a decoding acknowledgement message, the transmitter maybe operable to clear the L buffered coded packets. If N+M is carefully selected, this should represent most cases (for example, 99% of batch transmissions).

However, if, for any reason, more than N+M rateless coded packets are needed to decode the batch, the receiver may be operable to send a ’Negative Decoding Acknowledgment’ asking for more rateless coded packets for that batch. According to some embodiments, the transmitter may then interrupt sending packets of a current batch and send coded packets relating to the previous batch until a ’Decoding Acknowledgment’ corresponding to that previous batch is received. Since decoding is typically a fast process, in the case of LT coding methods, decoding involves only XOR operations, and thus the number of packets that may need to be temporary buffered is small. In the most conservative embodiment, a transmitter may be operable to keep all original packets of the previous batch before a ’Decoding Acknowledgment’ is received. According to such an implementation one batch of packets will be stored in a buffer at any given time.

It will be appreciated that N, M and L are design parameters. Higher M results in higher decoding success rate but simultaneously requires higher overhead.

Figure 4 shows a schematic illustration of transmission and reception techniques employed according to some embodiments.

**2.2 Optional request for specific packets if decoding fails**

If original coded packets are stored and an initial decoding attempt fails, a receiver may be operable, according to some embodiments, to specify which additional packets (either coded packets or source packets) are required to successfully decode a batch. A list of required packets maybe sent together with a with the 'Negative Decoding Acknowledgment' message. Such an implementation may improve network efficiency and overhead.

The nature of the decoding process in some embodiments may allow a receiving node or decoder to identify the missing packets. Decoding may fail in any case where no degree-one coded packets exist or when known degree-one coded packets cannot be used to reduce degree of other received coded packets any further. To determine which original packets are additionally required to allow successful decoding, a decoder may be operable to construct and update a table that has an entry for each source packet.

The table structure is very simple and consists of two main fields, one to represent the minimum degree of any input packet that contains that original packet and another field which represents the 'decoding impact' of the packet. The 'decoding impact' of an original packet is defined as the sum of the contributions of that packet in the input (coded) packets. In such a context, if an original packet is combined with k other packets in an input packet, the contribution of each of those original packets is equal to 1/ (k+1). For example, in Figure 1, the second original packet (v2) is contributing in 4 input (coded) packets (c1,c3, c4 and c6). The corresponding contribution of v2 in c1 is 1/2 (since there is another packet (v1 involved) and is 1/4 in c3 etc. Consequently, the 'decoding impact' of v2 is 1/2+1/4+1/2+1/4=1.5. Moreover, the minimum degree of input packets that contain v2 is 2 (both c1 and c4) and so the corresponding entries for v2 are 2 and 1.5 respectively.

If decoding is halted, the decoder may be operable to select the original packets which contribute to the input packets with lowest degree. That is to say, the decoder selects packets with lowest value of the first field in the table, excluding order one packets since they are already decoded. Amongst those packets, it is then operable to select the packet with highest 'decoding impact'. If there are a number ofpackets with identical maximum decoding impact values, the decoder may be operable to select one of them at random. The decoder is then operable to assume that the identified packet is available. Based on that assumption, the decoder may then be operable to perform analysis to identify whether decoding could be completed in presence of the given packet or not. The decoder does not need to actually decode the data but is operable to predict feasibility of decoding based on availability of a packet and the manner in which it is combined in other received coded packets. The decoder uses the assumed available additional packet to reduce degree of as many input packets as possible. However, it is still likely that the decoding process may halt after some iterations. If that is the case, the decoder may be operable to select another original packet. The selection criteria can be the same as that described above (filtering original packets with lowest value of first table entry and selecting the packet with highest decoding impact). The selected packet will be added to a list and a decoder may be operable to continue the process of decoding evaluation on the assumption that the selected packet is available. This procedure continues until a decoder determines that full decoding becomes feasible.

The result of the process is a list of required original packets. The list should be optimal or near to optimal, meaning it should be such that the list defines a minimum number of additional packets to guarantee successful decoding. This optimality is a result of the packet selection process which is such that it begins by selecting low degree packets, those low degree packets being usable to help a decoder exit from a deadlock by generation of degree one packets,. The techniques also accounts for more influential packets by considering the decoding impact of the packets.

Figure 5 illustrates schematically by means of a bipartite graph, mapping of original packets into input (coded) packets. In the example shown, decoding may not be continued since no degree one packet is available. A corresponding reference table is shown below:

| Original Packet # | Minimum Degree | decoding impact |
|---|---|---|
| v1 | 3 (see c2 or c3) | 1/3+1/3+1/5= 0.8667 |
| v2 | 2 (see c4) | 1/3+1/2+1/4+1/5= 1.2833 |
| v3 | 2 (see c1) | 1/2+1/3+1/5= 1.0333 |
| v4 | 3 (see c3) | 1/3+1/4=0.583 |
| v5 | 2 (see c1) | 1/2+1/3+1/2+1/4+1/5= 1.7833 |
| v6 | 4 (see c5) | 1/4+1/5= 0.4500 |

The decoder is operable to select an original packet and check whether availability of that original packet would result in full decoding or not. To select the packet, first original packets with minimum degree are filtered. In this example the minimum degree is 2, hence filtered packets are v2, v3 and v5. Amongst those three packets, decoder selects v5 since it has the highest decoding impact (1.7833). The decoder need predicts success of decoding process in presence of v5:

C1 will be decoded and v3 will be known
C4 will be decoded and v2 will be known
C2 will be decoded and v1 will be known
C3 will be decoded and v4 will be known
C5 (or C6) will be decoded and v6 will be known

This example shows that if v5 is known, decoding can be done successfully. Hence, the receiver is operable to piggyback this information along with the NACK message and the transmitter will send v5 to allow successful decoding. Such an implementation can save on packet transmissions. In this case for example, if instead of v5, the transmitter sent any high degree packets (any packet with degree above 1) or sent v1 or v4 for example, decoding would remain unfeasible.

**2.3 Size of a batch**

One implementation consideration is batch size. Generally speaking, longer (greater numbers of source packets) batches offer a more efficient transmission scheme, since they result in a lower overhead and hence reduce batch latency. Batch latency is defined as time taken to deliver all packets of a batch. However, in contrast to a strictly sequential packet transmission regime according to which a packet is immediately usable upon its correct reception, use ofrateless codes may result in a situation in which a packet may need to wait until the whole batch is received before it can be successfully decoded. If the individual packets delay is important as well as batch delay, for example, in multimedia applications, batch size can be restricted.

It will be appreciated that batch size has implications in relation to both memory requirement and computational complexity of decoding. These considerations may be taken into account when batch size is decided for a data stream or data message.

**2.4 Data Confidentiality**

It will be appreciated that in order to decode the coded packets it is necessary for a receiver to be aware of a coding map, which indicates how source packets are combined to form rateless coded packets. Each coded packet will typically have a sequential packet number and the mapping for each coded packet will be known to both the transmitting and receiving node.

If mapping between original packets and rateless coded packets is not sent along with the coded packets but rather in a secure manner such that only a receiving node is informed about the mapping structure, no third party can decode the data.

It will be appreciated that such an implementation may be of use in cloud environments where data confidentiality can be of concern. The nature of fountain coding is such that there is typically a high number of source packet combinations in which coded packets may be constructed. As such, a brute-force attack is typically incapable of decoding the source data, provided that the batch size chosen is not too small. More specifically, if the batch size is N, the number of attempts to decode N original packets from L, (L≥N) received rateless coded packets is

$$M = \left( \sum_{n=1}^{N} \frac{N!}{n! \times (N-n)!} \right)^{L} \qquad (1)$$

With sufficiently large N, it will easily exceed the capabilities of any brute-force irreversible computing device to decode the data. Equation (1) is based on the assumption that for each packet the coding degree, d, can be any value between 1 to N. Whilst in principle this is true, d is normally taken from a given distribution, in order to maximize the likelihood of decoding success with minimal overhead. Ideally, to avoid redundancy, the received packet graph would have the property that just one coded packet has degree one at each iteration. At each iteration, when a packet is processed, the degrees in the graph are reduced in such a way that one new degree-one packet appears. Such ideal behavior is achieved by using an ideal *soliton* distribution. Given a batch size of K:

P(1)=1/K
P(d)=1/d(d-1) for d=2,3,...K

Unfortunately, the ideal *soliton* distribution as a degree distribution works poorly in practice since fluctuations around expected behavior make it likely that at some point in the decoding process there will be no degree-one check nodes; and, furthermore, a few source nodes will receive no connections at all. A small distribution modification fixes these problems.

Figure 6 illustrates schematically a robust soliton distribution for K=40 and K=1000. The *robust soliton* distribution has two extra parameters and is designed to ensure that the expected number of degree-one packets is more than 1. Use of the robust soliton distribution has implications on the number of operations required to decode rateless coded packets through brute-force. The distribution has a long tail. It is, however, possible to ignore the last 1% of the distribution (although this can have very significant impact on the actual number of operations required).

Figure 7 illustrates schematically the number of operations required to break a 128-bit and a 256-bit key. A small batch size is sufficient to assure robustness against brute-force attacks. With 50 of todays' most powerful supercomputers (Each with 20 Peta-FLOPS), it will takes 1.07e31 years to break a 128-bit code. Moreover, the above results assume that the batch size is known by the brute-force attacker. In practice that is unlikely to be the case. Furthermore, the 1% tail of code degree distribution is ignored that can increase the complexity significantly.

It will be appreciated that a sender can exchange a coding map with a receiver in a secure manner in a number of ways.

**2.4.1 Secure exchange of random number generator seed**

Rateless coding of information (particularly in the case of LT codes referred to above) requires two sets of random numbers: coding degrees of packets and an indication of the selection of participating original packets. Common practice is that the coding degree is taken from a given distribution (for example, soliton or robust soliton distributions) whilst original packets are chosen uniformly at random. Since some packets may be lost during delivery, each packet needs to have a sequence number. One way of exchanging a coding map between a sender and a receiver is to share a seed of each of the two distributions to be used with a receiver. The first seed is used to generate the coding degrees and the second seed is used to identify participating packets.

Figure 8 illustrates schematically exchange of a coding map via exchange of seed vales. In the example of Figure 8, S1 and S2 are the two seed values. To exchange seeds, a transmitter may be operable to use Public-key cryptography. Generally, public key cryptography is complex and computationally expensive and thus not suitable for large volumes of data. In one implementation of aspects and embodiments described, public key cryptography is used to encrypt the seed values only. In some embodiments, a transmitter may use the same mapping for all consecutive batches in a session. In such a case, the sequence numbers are reset at the beginning of each batch and a batch sequence number is included in coded packets.

### 2.4.2 Secure exchange of direct coding map

In alternative embodiments, a transmitter may be operable to use public-key cryptography or another secure data exchange mechanism to share the actual mapping of original packets. Such an implementation can be useful, since in many cases, a pre-engineered mapping can be more efficient than relying on a mapping generated at each side by means of random numbers. The planned mapping can be used for all consecutive batches. Again, batch ids may be included in coded packets.

### 2.5 Data Integrity

Because of the nature of fountain coding techniques, some (approximately 1-5%) coded data packets are essentially repeated and thus may be decoded more than once. In some embodiments, different versions of a decoded source packet can be compared at a receiver to obtain a degree of assurance of data integrity. That comparison may be made during a transmission. Since the decoding of rateless coded packets can be heavily interdependent, a small modification of bit streams of one packet can easily propagate into many other packets. Therefore, redundantly decoded packets can be used to assure integrity of received data. In addition, use of a rateless coding scheme can relax requirements for heavy CRC codes to assure correct reception of data packets when there is possibility that a number of bits are altered.

From a security point of view, a traditional sequential packet transmission regime is such that CRC codes may not be used to assure data integrity. In particular, an eavesdropper can alter both the data and the corresponding CRC bits. Use of a rateless coded transmission regime is such that a transmitter can combine a number of CRC bits calculated for selected set of original packets and send them at the end of data packets. Since rateless coded packets are highly correlated, assuring correct decoding of a small number of packet may offer assurance regarding the integrity of all packets with a high probability. Few full packets can contain the CRC bits of many original packets. Since the coding map is not known to an eavesdropper, alteration of data and the corresponding CRC bits is unlikely.

### 2.6 Controlling the use of rateless code based packet delivery

Aspects and embodiments offer a scheme of packet delivery based on rateless codes with a degree of feedback. Such transmission techniques can be used as a means of prioritizing a service or data traffic flow. Apart from data confidentially advantages (of importance in a cloud environment) one advantage of the scheme over TCP is that of reduced latency while maintaining levels of reliability, at least in comparison to UDP transmission schemes. Aspects and embodiments may also be of use in: delay sensitive applications (especially those with lower data rates); Data flows associated with premium users in cloud environment (service differentiation); Scenarios where a Service Level Agreement (SLA) is expected to be violated due to service latency (financial penalty); Delivering emergency (high priority) services over a congested network; and Delivering premium services in high loss channels.

A network controller, or control logic at a transmitting node may, according to some embodiments, be operable to limit the use of the approach according to aspects described to a certain number of flows per host. In some embodiments, the controller maybe operable to define a threshold or threshold(s) on acceptable latency. On detection of the threshold being passed, the rateless packet delivery mode is used. That is to say, a transmitter may be operable to send packets using a default protocol (eg TCP) but switch to a rateless mode in accordance with aspects and embodiments described herein once latency is determined to exceeds a certain level. It is possible to apply this, and other, rate control algorithms for each rateless code stream separately.

Aspects and embodiments recognize that security and uncontrolled latencies are a concern when running data transmission services, for example, on a cloud computing infrastructure. Use ofrateless coding with feedback may address the shortcomings of existing transport protocols such as TCP and UDP. UDP does not guarantee successful delivery of data packets and hence is not used for wide range of applications where reliability is strictly required. TCP, on the other hand, is a decades-old transport protocol which is very inefficient especially over long and high bandwidth pipes. Aspects and embodiments recognize that there is a lack of effective mechanism to prioritize services or users in cloud-based communications.

Aspects and embodiments may provide a flexible way to increase network throughput whilst minimizing delay of sensitive applications. Aspects may work well even when packet loss rate is high, for example in highly congested networks. As a result of use of rateless coding techniques, data confidentiality and data integrity may be assured without any extra overhead.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

**1.** A method of receiving a data message comprising a plurality of data symbols from a transmitting node at a receiving node in a network, said method comprising:

receiving a plurality of coded packets comprising said data message encoded using rateless coding techniques;
decoding said received plurality of coded packets;
determining at least one of said plurality of data symbols required by said receiving node to successfully decode said data message; and
transmitting an indication of said required data symbols to said transmitting node.

**2.** A method according to claim 1, wherein said indication is transmitted after said receiving node determines that trigger criteria are met.

**3.** A method according to claim 2, wherein said trigger criteria comprises receipt of a selected number of coded packets.

**4.** A method according to claim 3, comprising: determining said number of coded packets in dependence upon at least one of: data message type, data message priority, or service level.

**5.** A method according to any preceding claim, wherein said decoding occurs concurrently with receipt of coded packets.

**6.** A method according to claim 3 or claim 4, wherein said decoding occurs after receipt of said selected number of coded packets.

**7.** A method according to any preceding claim, wherein said method comprises determining which of said plurality of data symbols required by said receiving node to successfully decode said data message may be most useful in the decoding process and transmitting an indication of at least one of those data symbols determined to be most useful to said receiving node.

**8.** A method according to any preceding claim, wherein said method comprises:

receiving an encoded coding map from said transmitting node.

**9.** A method according to any preceding claim, wherein said method comprises decoding one or more of said coded packets to extract at least one of said data symbols and checking said extracted data symbol with an equivalent data symbol decoded from a different set of one or more of said coded packets.

**10.** A network node operable to receive a data message comprising a plurality of data symbols from a transmitting node in a network, said network node comprising:

reception logic operable to receive a plurality of coded packets comprising said data message encoded using rateless coding techniques; and
decoding logic operable to decode said received plurality of coded packets;
assessment logic operable to determine at least one of said plurality of data symbols required by said receiving node to successfully decode said data message; and
transmission logic operable to transmit an indication of said required data symbols to said transmitting node.

**11.** A method of transmitting a data message comprising a plurality of data symbols from a transmitting node to a receiving node in a network, said method comprising:

encoding said data symbols into a plurality of coded packets using rateless coding techniques;
and transmitting said coded packets to said receiving node until receipt of an indication of at least one of said plurality of data symbols required by said receiving node to successfully decode said data message.

**12.** A computer program product operable, when executed on a computer, to perform the method of any one of claims 1 to 9 or claim 11.

**13.** A network node operable to transmit a data message comprising a plurality of data symbols to a receiving node in a network, said network node comprising:

coding logic operable to encode said data message into a plurality of coded packets using rateless coding techniques; and
transmission logic operable to transmit said coded packets to said receiving node until receipt of an indication of at least one of said plurality of data symbols required by said receiving node to successfully decode said data message.

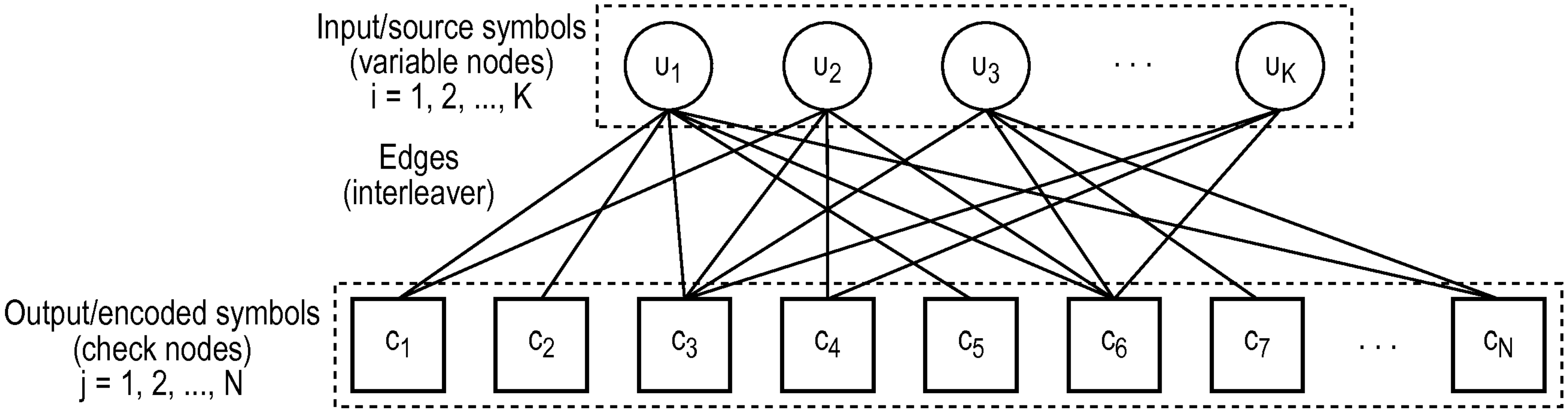


FIG. 1: A bipartite-graph-based description of an LT code showing the source symbols (variable nodes) and the LT-encoded symbols (check nodes). The symbols can be of an arbitrary size. For instance, c4 is calculated by the modulo-2 sum (XOR product) of v2 and vK in the specific example portrayed in this bipartite graph.

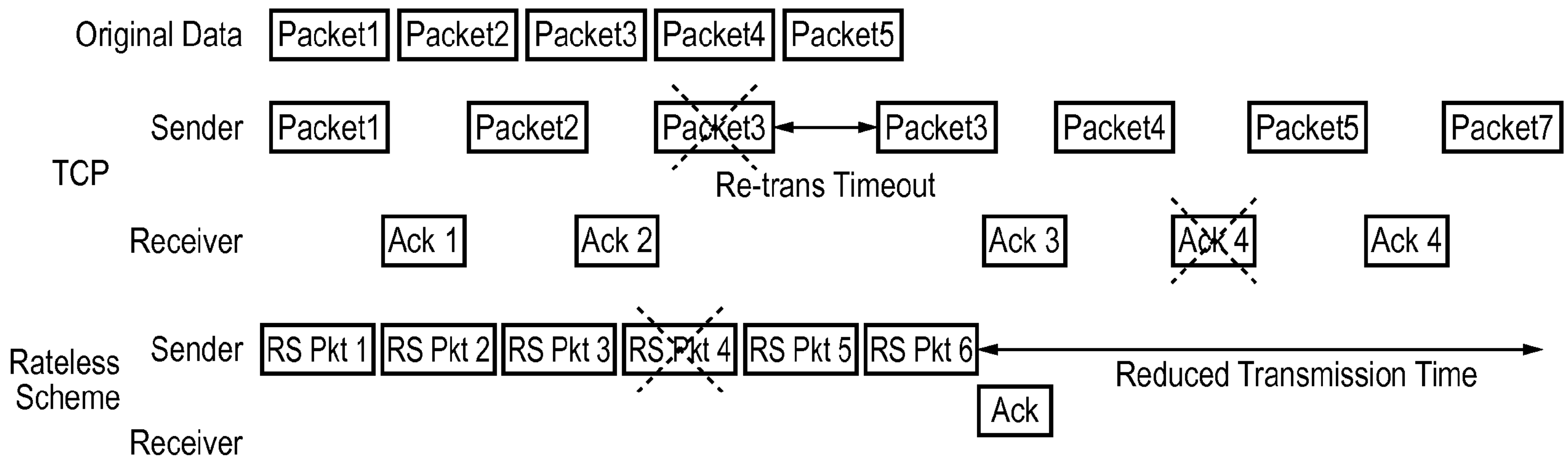


FIG. 2: Comparison of TCP and the proposed rateless coding transmission

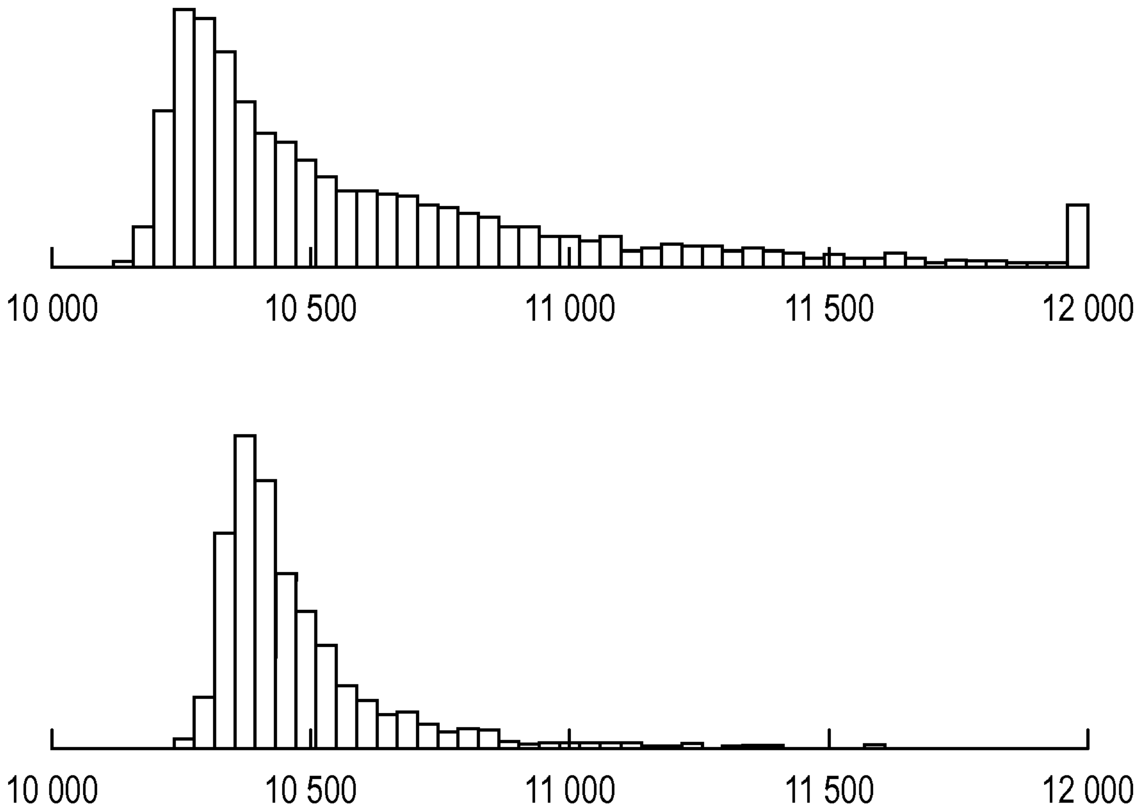


FIG. 3: Histogram of the actual number of rateless coded packets required to successfully decode 10,000 original packets. Top figure shows the case where the average number of required packets is smaller but the variance is higher.

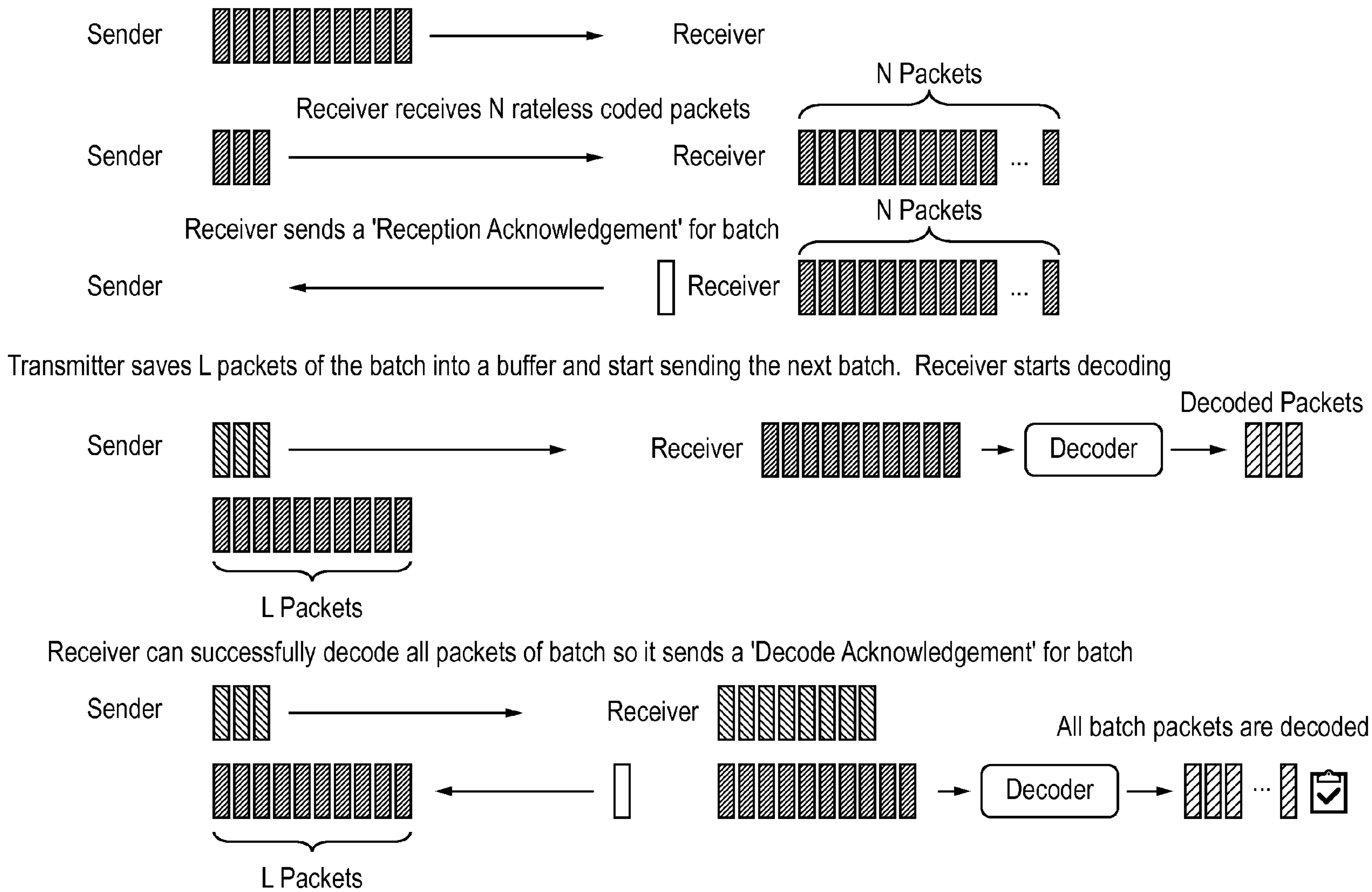


FIG. 4: schematic illustration of one embodiment

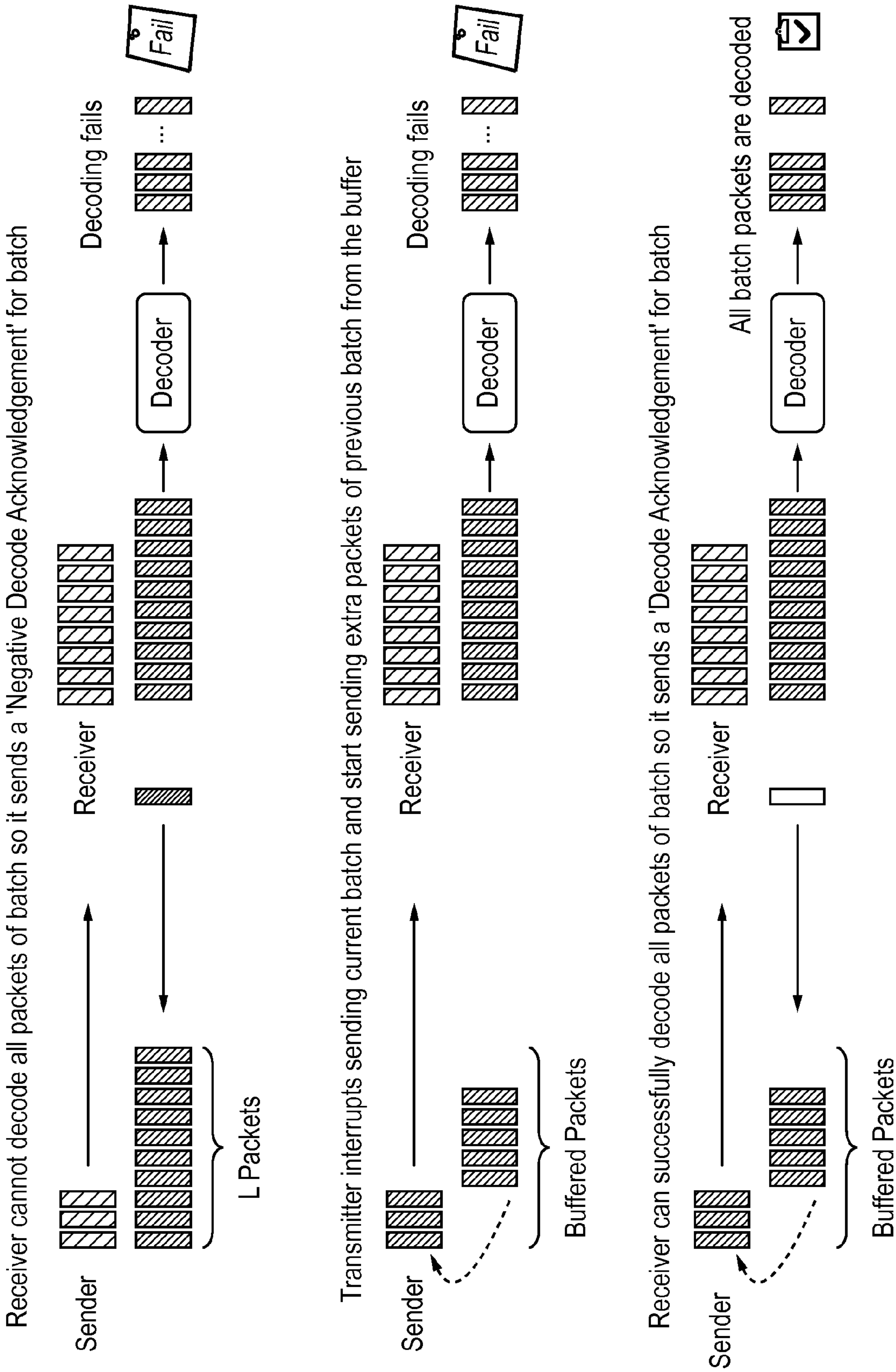


FIG. 4 (continued): schematic illustration of one embodiment

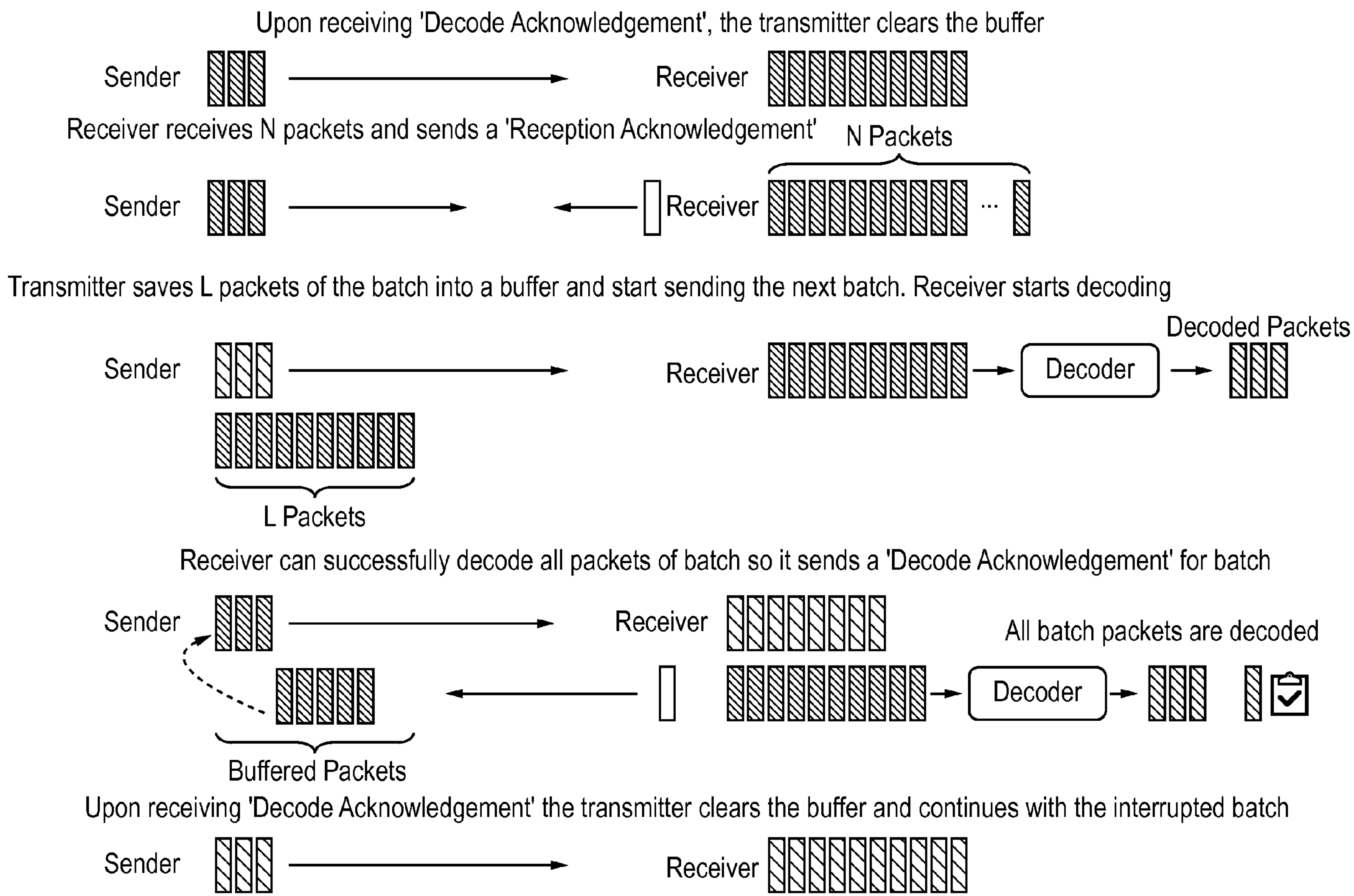


FIG. 4 (continued): schematic illustration of one embodiment

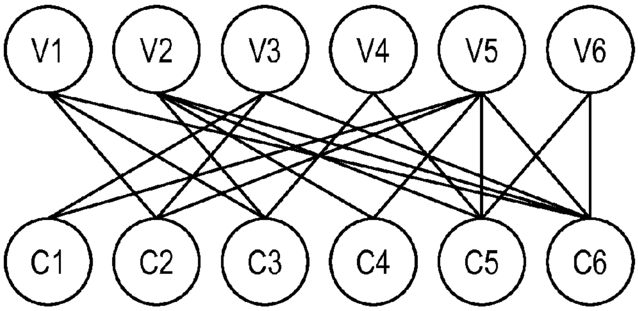


FIG. 5: Bipartite graph showing the mapping between original and coded packets

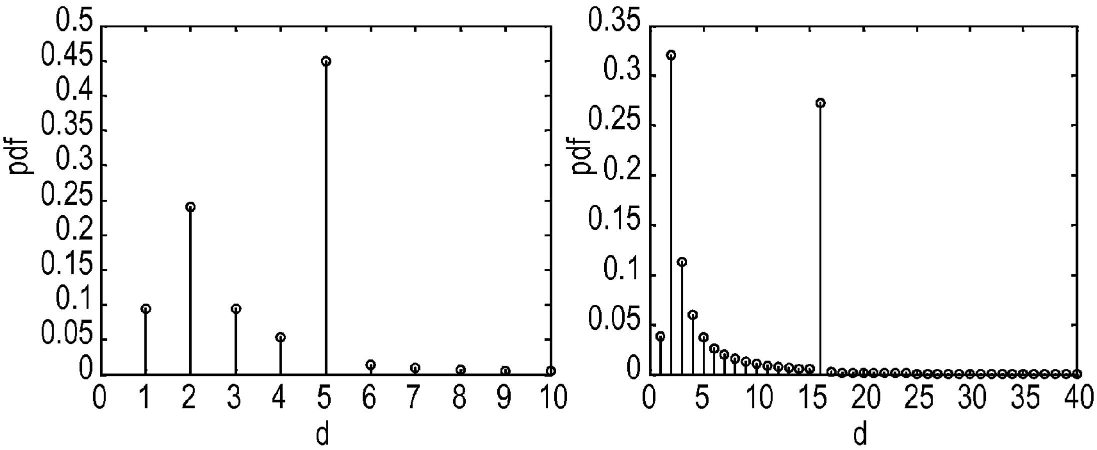


FIG. 6: Distribution of coding degree, left: K=40 and right: K=1000

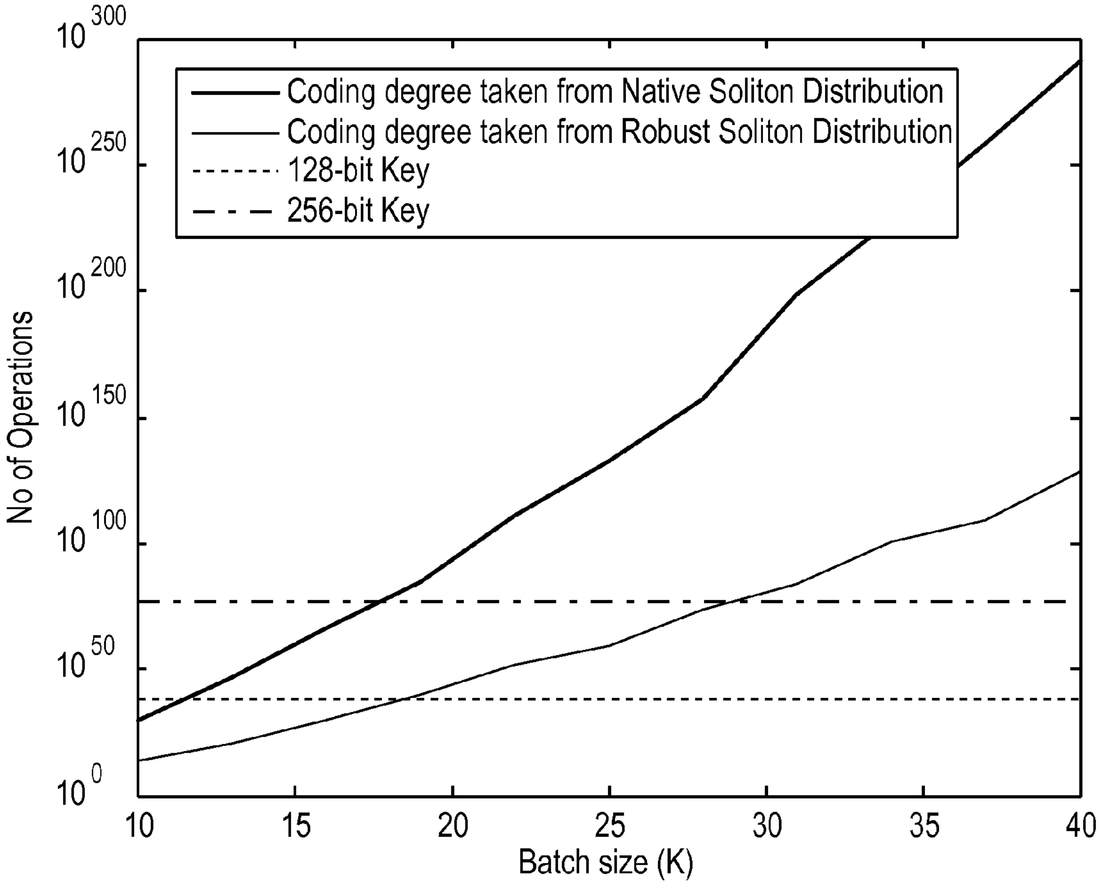


FIG. 7: No of operations required to decode rateless coded packets in a brute-force manner

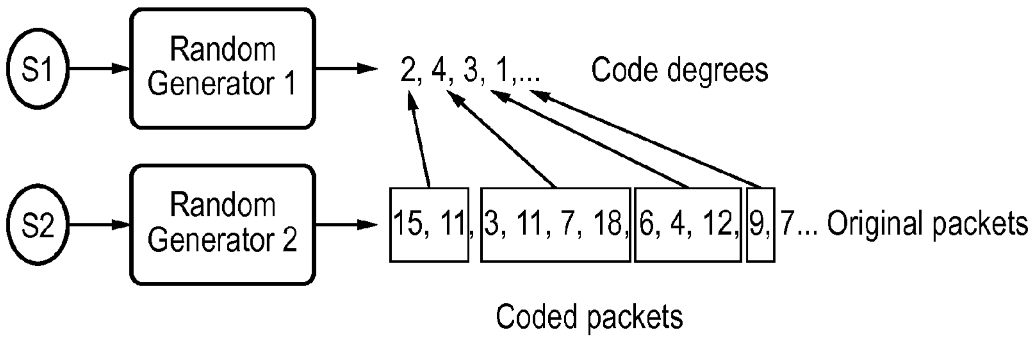


FIG. 8: Example of coding map generation based on seeds' exchange

Europäisches Patentamt
European Patent Office
Office européen des brevets

# EUROPEAN SEARCH REPORT

Application Number
EP 13 30 5351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PRAKASH G ET AL: "Performance analysis of fountain codes with robust soliton distribution for erasure channels", 2011 IEEE RECENT ADVANCES IN INTELLIGENT COMPUTATIONAL SYSTEMS (RAICS 2011) IEEE PISCATAWAY, NJ, USA, 2011, pages 671-674, XP002710780, ISBN: 978-1-4244-9478-1 * the whole document * ----- | 1-13 | INV. H04L1/00 |
| X | US 2011/246848 A1 (YUE GUOSEN [US] ET AL) 6 October 2011 (2011-10-06) * abstract * * page 1, paragraph 7 - paragraph 10 * * page 2, paragraph 26 - page 3, paragraph 43 * * page 6, paragraph 58 - paragraph 61 * ----- | 1-13 | |

TECHNICAL FIELDS SEARCHED (IPC)
H04L

The present search report has been drawn up for all claims

| Place of search | Date of completion of the search | Examiner |
|---|---|---|
| The Hague | 9 August 2013 | Toumpoulidis, T |

4

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..............................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 30 5351

This annex lists the patent family members relating to the patent documents cited in the above-mentioned European search report. The members are as contained in the European Patent Office EDP file on
The European Patent Office is in no way liable for these particulars which are merely given for the purpose of information.

09-08-2013

| Patent document cited in search report | Publication date | Patent family member(s) | Publication date |
|---|---|---|---|
| US 2011246848 A1 | 06-10-2011 | US 2011246848 A1 | 06-10-2011 |
| | | WO 2011126651 A2 | 13-10-2011 |

EPO FORM P0459

For more details about this annex : see Official Journal of the European Patent Office, No. 12/82